# EUROPÄISCHE PATENTSCHRIFT

(11) **EP 3 377 872 B1**
(45) Veröffentlichungstag und Bekanntmachung des Hinweises auf die Patenterteilung: **24.03.2021**
(21) Anmeldenummer: 16787401.5
(22) Anmeldetag: 21.10.2016
(51) Int. Cl.: G01M 17/02, B29D 30/00, B29D 30/72

(54) **VERFAHREN ZUM MARKIEREN UND SORTIEREN VON REIFEN SOWIE VORRICHTUNG ZUR DURCHFÜHRUNG**
METHOD FOR MARKING AND SORTING TIRES, AND DEVICE FOR PERFORMING THE METHOD
PROCÉDÉ DE MARQUAGE ET DE TRI DE PNEUMATIQUES ET DISPOSITIF POUR LA MISE EN OEUVRE DU PROCÉDÉ

(30) Priorität: 19.11.2015 DE 102015222865
(43) Veröffentlichungstag der Anmeldung: 26.09.2018
(73) Patentinhaber: ZF Friedrichshafen AG, 88046 Friedrichshafen (DE)
(72) Erfinder: DWOLINSKI, Thomas, 94127 Neuburg am Inn (DE); BÖSL, Roland, 94034 Passau (DE); PRAX, Christian, 94127 Neuburg a. Inn (DE); STRUNZ, Franz, 94258 Frauenau (DE); SAXINGER, Wolfgang, 94136 Thyrnau (DE); GRIEBL, Andreas, 94542 Haarbach (DE)
(74) Vertreter: ZF Friedrichshafen AG
(86) Internationale Anmeldenummer: PCT/EP2016/075383
(87) Internationale Veröffentlichungsnummer: WO 2017/084830

(56) Entgegenhaltungen:
- WO-A2-2011/143175
- US-A1- 2013 233 067
- Mecanique TV: "KUKA Robot Car Tire Handling", , 16. November 2012 (2012-11-16), Seite 1, XP054977085, Gefunden im Internet: URL:https://www.youtube.com/watch?v=z8NNHX GcvPQ [gefunden am 2017-01-20]

## Beschreibung

Die Erfindung betrifft ein Verfahren zum Markieren und Sortieren von Reifen sowie zum Wechseln von Prüffelgen für die Reifen sowie eine Vorrichtung zur Durchführung des Verfahrens. Die Erfindung betrifft ferner die Verwendung eines Roboters.

Es ist bekannt, dass Fahrzeugreifen zur Ermittlung diverser Kennwerte in einer Reifenprüfmaschine, auch Reifenprüfstand genannt, einer strengen Prüfung unterzogen werden, wobei insbesondere Unwuchten, die Gleichförmigkeit, der Konuswert und die Geometrie des Reifens gemessen werden. Die ermittelten Kennwerte werden als Markierungen, z. B. als Farbpunkte am Reifen angebracht und kennzeichnen die Reifen nach Qualitätsstufen.

Durch die EP 2 816 338 A1 wurde eine Reifenprüfmaschine bekannt, auf welcher Reifentests durchgeführt werden. Die Reifenprüfmaschine umfasst senkrecht und koaxial angeordnete untere und obere Spindeln, an welchen jeweils eine untere Prüffelgenhälfte und eine obere Prüffelgenhälfte befestigbar sind. Der zu prüfende Reifen wird zwischen den Prüffelgenhälften eingespannt und zwecks Prüfung in Rotation versetzt. Die Reifenprüfmaschine weist ferner eine bewegliche Lauftrommel auf, welche zwecks Erzeugung eines Anpressdruckes an den zu prüfenden Reifen anpressbar ist. Schließlich umfasst die Reifenprüfmaschine diverse Fördereinrichtungen für den Transport des Reifens, nämlich eine Einfördereinrichtung, eine im Bereich der Prüffelgenhälften angeordnete zentrale Fördereinrichtung sowie eine Ausfördereinrichtung.

Durch die WO 2015/086187 A1 wurde ein Verfahren zum automatischen Markieren eines Reifens bekannt, wobei der Reifen bereits eine Reifenprüfmaschine verlassen hat und einer Fördereinrichtung einer Markierstation zugeführt ist. In der Reifenprüf- oder Messmaschine wird ein spezieller Reifenkennwert, hier der Hochpunkt eines Fahrzeugreifens, dessen Lage vom Drehwinkel abhängig ist, gemessen. Der zu markierende Reifen wird der Markierstation, welche der Messmaschine direkt nachgeordnet ist, auf direktem Wege über Förderbänder zugeführt.

Aus der US 2013/233067 A1 ist Reifenprüfstand mit einer Vorrichtung zum automatisierten Wechseln von Prüffelgen bekannt. Die Prüffelgen sind, wie bei derartigen Prüfständen üblich, als aus zwei Axialhälften bestehend ausgebildet. Jede Prüffelge ist für eine bestimmte Reifengröße geeignet, so dass zur Prüfung von unterschiedlichen Reifengrößen ein Felgenwechsel erforderlich werden kann. Dazu umfasst der Prüfstand weiterhin eine Lagereinheit, welche eine Anzahl unterschiedlicher Prüffelgen bevorratet. Mittels eines fluiddruckbetätigbaren Aufzugmechanismus in Zusammenwirkung mit einem arm-artig ausgebildeten Transfermechanismus kann der Lagereinheit eine benötigte Prüffelge entnommen werden, um die an einer Prüfstation des Reifenprüfstands installierte Prüffelge zu ersetzen. Der Reifenprüfstand kann weiterhin auch eine nicht näher beschriebene Markierstation und eine ebenfalls eine nicht näher beschriebene Sortierstation umfassen.

Unter der Internetadresse https://www.youtube.com/watch?v=z8NNHXGcvPQ ist eine Videosequenz abrufbar, die einen Roboter zeigt, der einem Reifenprüfstand zugeordnet ist und mittels einer Hebevorrichtung Reifen anheben kann. Die Hebevorrichtung ist dabei als flaches und rechteckiges Stück Blech ausgebildet, welches mit seinen axialen Endstücken über die zentrale Öffnung eines Reifens in dessen Hohlraum eingeführt werden kann, so dass der Reifen angehoben werden kann. Der Roboter nimmt die ihm zugeführten Reifen entgegen und legt sie in einer Prüfeinrichtung des Reifenprüfstands ab. Nachdem die Prüfeinrichtung den Reifen geprüft hat, nimmt der Roboter den Reifen wieder auf und legt in auf einer von zwei gezeigten Ablagevorrichtungen ab.

Die WO 2011/143175 A2 offenbart ein System zur Montage von Fahrzeugrädern. Ein Roboterarm des Systems entnimmt einem Felgenlager eine Felge, ordnet ein Ventil in der Felge und die Felge schließlich in einem Reifen an. Das solcherart montierte Fahrzeugrad wird dann vom Roboterarm an eine Reifenfüllstation weitergereicht, wo das Fahrzeugrad mit Druckluft befüllt wird. Anschließend wird das Fahrzeugrad einem Wuchttest unterworfen. Je nach Wuchtverhalten wird das Fahrzeugrad entsprechend markiert. Weiterhin wird ein Verfahren offenbart, demgemäß das Fahrzeugrad vom Roboterarm abhängig von einem Ergebnis des Wuchttests an unterschiedlichen Stationen zur weiteren Bearbeitung abgelegt wird.

Ein der Erfindung zu Grunde liegendes Problem besteht darin, die der Reifenprüfung durch die Reifenprüfmaschine nachgeordneten Arbeitsschritte, insbesondere das Markieren und Sortieren der Reifen mit möglichst geringem Vorrichtungsaufwand und geringen Durchlaufzeiten durchführen zu können.

Das Problem der Erfindung wird durch die unabhängigen Ansprüche 1 und 2 gelöst. Eine vorteilhafte Ausgestaltung ergibt sich aus dem Unteranspruch.

Nach einem ersten Aspekt der Erfindung ist bei einem Verfahren zum Markieren und Sortieren von Reifen und/oder zum Wechseln von Prüffelgen für die Reifen vorgesehen, dass die Tätigkeiten oder Arbeitsschritte, welche für das Markieren, Sortieren und/oder das Wechseln erforderlich sind, durch einen an sich bekannten Roboter ausgeführt werden. Durch die Verwendung eines Roboters für das Handling oder die Handhabung des Reifens und/oder der Prüffelgen ergeben sich vereinfachte Vorrichtungen, beispielsweise eine vereinfachte Markierstation. Darüber hinaus ergibt sich ein schnellerer Durchlauf des geprüften Reifens von der Reifenprüfmaschine zur Markierstation und zur Sortierstation. Ferner bietet die Verwendung des Roboters den Vorteil, dass auch andere, den Reifen nicht direkt betreffende Arbeitsschritte, beispielsweise das Wechseln der Prüffelgen vom Roboter durchgeführt werden können. Das Wechseln der Prüffelgen, welche jeweils aus einer oberen und einer unteren Prüffelgenhälfte bestehen, erfolgt unabhängig von Markier- und Sortiervorgang, d. h. dann, wenn ein Reifen mit einer anderen Größe in der Reifenprüfmaschine geprüft werden soll. In diesem Falle tauscht der Roboter die alten aufgespannten Prüffelgenhälften gegen neue Prüffelgenhälften mit anderem Durchmesser aus.

Erfindungsgemäß erfolgt das Markieren durch Anbringen von Markierungen. z. B. Farbpunkten auf der Reifenoberfläche, insbesondere auf den Seitenwänden des Reifens. Die Markierungen entsprechen Kennwerten, die in der Reifenprüfmaschine ermittelt wurden und bestimmte Qualitätsstufen bezeichnen. Die Qualitätsstufen sind maßgebend für die anschließende Sortierung. Der Roboter führt den Reifen direkt zur Markierstation, hält den Reifen positionsgenau während des Markiervorganges durch eine Markiereinrichtung und führt den fertig markierten Reifen anschließend zur Sortierstation.

Erfindungsgemäß sortiert der Roboter die markierten Reifen durch Ablegen der Reifen auf einer ausgewählten Fördereinrichtung; jeder Qualitätsstufe des Reifens ist eine eigene Fördereinrichtung, z. B. eine Rollenbahn zugeordnet, auf welcher der Roboter den betreffenden Reifen ablegt.

Erfindungsgemäß erfolgt das Wechseln der Prüffelgen, welche jeweils eine untere und eine obere in der Reifenprüfmaschine montierte Felgenhälfte umfassen, durch den Roboter. Für diese Aufgabe verwendet der Roboter ein spezielles Felgenwechselwerkzeug, mit dem er die Prüffelgen erfassen, demontieren, aus der Reifenprüfmaschine entnehmen und in einem Felgenmagazin ablegen kann. Anschließend entnimmt der Roboter andere Prüffelgenhälften (mit größerem oder kleinerem Durchmesser) aus dem Felgenmagazin und montiert diese in der Reifenprüfmaschine.

Erfindungsgemäß wird der zu markierende Reifen, von der Reifenprüfmaschine bereitgestellt und an den Roboter übergeben. Dieser nimmt den Reifen auf und führt ihn zwecks Markierung einer Markierstation zu.

Erfindungsgemäß wird der markierte Reifen vom Roboter direkt zu einer ausgewählten Fördereinrichtung geführt und auf dieser abgelegt. Die Auswahl der Fördereinrichtung durch den Roboter erfolgt nach der Qualitätsstufe, welche der Reifen erhalten hat.

Nach einem weiteren Aspekt der Erfindung umfasst eine Vorrichtung zur Durchführung des Verfahrens eine Reifenprüfmaschine, eine Markierstation, eine Sortierstation, ein Felgenmagazin sowie einen an sich bekannten Roboter mit einem Aktionsradius, innerhalb dessen - zumindest teilweise - die Reifenprüfmaschine, die Markier- und Sortierstation sowie das Felgenmagazin angeordnet sind. Der Roboter befindet sich somit im Aktionszentrum der vorgenannten Einrichtungen. Der für diese Aufgaben verwendete Roboter weist vorzugsweise sechs Achsen auf und ist an sich bekannt. Ein bevorzugter Robotertyp ist am Markt unter der Bezeichnung *KR QUANTEC Pro* vom Hersteller *KUKA* erhältlich.

Erfindungsgemäß weist die Reifenprüfmaschine eine Spindel, auf welcher in axialer Richtung verschiebbare Prüffelgenhälften montierbar sind, auf. Zwischen den Prüffelgenhälften wird der zu prüfende Reifen eingespannt und in Rotation versetzt. Zusätzlich weist die Reifenprüfmaschine eine Fördereinrichtung auf, auf welcher der fertig geprüfte Reifen abgelegt wird und damit in den Aktionsbereich des Roboters gelangt. Damit kann der Roboter den fertig geprüften Reifen greifen und den nachfolgenden Stationen zuführen.

Erfindungsgemäß weist die Markierstation eine Markiereinrichtung, vorzugsweise eine schwenkbare Markiereinrichtung auf, welche an einer Konsole oder Säule befestigt ist. Durch die Verschwenkbarkeit können Markierungen an beiden Seitenwänden des Reifens angebracht werden, ohne dass der Reifen gewendet werden muss. Der Roboter kennt die durch Radius und Umfangswinkel definierte Stelle für die Markierung am Reifen und positioniert den Reifen entsprechend zur Markiereinrichtung. Aufgrund der Verwendung des Roboters kann die Markierstation - im Vergleich zum bekannten Stand der Technik - relativ einfach, beispielsweise ohne aufwendige Hebe- und Reifenwendeeinrichtungen ausgebildet werden.

Erfindungsgemäß umfasst die Sortiereinrichtung diverse Fördereinrichtungen, vorzugsweise Rollenbahnen, wobei jeder Rollenbahn eine bestimmte Qualitätsstufe der geprüften Reifen zugeordnet ist. Die Sortierung erfolgt somit dadurch, dass der Roboter den Reifen auf der Rollenbahn ablegt, welche der Qualitätsstufe des Reifens zugeordnet ist.

Erfindungsgemäß ist das Felgenmagazin als Regal zur Ablage und Entnahme von Prüffelgen, welche aus einer oberen und einer unteren Prüffelgenhälfte bestehen, ausgebildet. Dies bedeutet, dass der Roboter, bestückt mit einem speziellen Felgenwechselwerkzeug, von der Frontseite her in das Regal eingreifen kann, um die Prüffelgenhälften zu entnehmen oder abzulegen. Nach einer weiteren bevorzugten Ausführungsform weist der Roboter sechs Achsen auf und verfügt damit über eine maximale Beweglichkeit und Reichweite, um die vorgenannten Aufgaben des Markierens, Sortierens und Wechselns von Prüffelgen durchführen zu können. Der Roboter ist-wie erwähnt - handelsüblich.

Erfindungsgemäß ist der Roboter mit unterschiedlichen Greifwerkzeugen bestückbar, d. h. Greifwerkzeugen, welche an die jeweils durchzuführende Aufgabe angepasst sind. Erfindungsgemäß ist ein erstes Greifwerkzeug als Drei-Finger-Greifer ausgebildet, welcher von innen in den Reifen greift und sich kraftschlüssig an den Reifenwulst anlegt. Damit kann der Reifen leicht erfasst, von einer zu anderen Station befördert und schließlich wieder abgelegt werden.

Erfindungsgemäß ist ein weiteres Greifwerkzeug als Felgenwechselwerkzeug ausgebildet, welches zangenartig ausgebildet ist und die Prüffelgenhälften ergreifen und transportieren kann. Insbesondere ist der Roboter mit dem Felgenwechselwerkzeug in der Lage, die Prüffelgenhälften von der Spindel der Reifenprüfmaschine zu demontieren, zu entfernen, zum Felgenmagazin zu befördern und dort abzulegen.

Ein weiterer , nicht beanspruchter Aspekt der Erfindung betrifft die Verwendung eines sechs Achsen aufweisenden, an sich bekannten Roboters für die Handhabung von Reifen, welche von einer Reifenprüfmaschine bereit gestellt werden und einer weiteren Verwendung zugeführt werden sollen. Durch die Verwendung des Roboters können die durchzuführenden Arbeitsschritte und Aufgaben in kürzester Zeit absolviert werden. Darüber hinaus sind die Vorrichtungen, insbesondere die Markierstation wesentlich einfacher, d. h. auch kostengünstiger ausgebildet. Neben den erwähnten Aufgaben wie Markieren, Sortieren und Felgenwechsel kann der Roboter gegebenenfalls auch weitere Tätigkeiten, welche in dieser Arbeitsphase anfallen, z. B. das Etikettieren von Reifen vornehmen.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
Fig. 1a eine erfindungsgemäße Robotereinheit zum Markieren und Sortieren von Reifer in einer Ansicht von oben,
Fig. 1b die Robotereinheit gemäß Fig. 1 a in einer Ansicht von vorn,
Fig. 1c die Robotereinheit in einer Seitenansicht,
Fig. 1d die Robotereinheit in einer 3-D-Darstellung,
Fig. 2a die Robotereinheit beim Markieren von Reifen in einer 3-D-Ansicht von vorn,
Fig. 2b die Robotereinheit gemäß Fig. 2a in einer 3-D- Ansicht von hinten,
Fig. 3a die Robotereinheit beim Sortieren von Reifen in einer 3-D-Ansicht von vorn,
Fig. 3b die Robotereinheit gemäß Fig. 3a in einer 3-D-Ansicht von hinten,
Fig. 4a die Robotereinheit beim Wechsel eines Greifwerkzeuges in einer 3-D-Ansicht von vorn,
Fig. 4b die Robotereinheit gemäß Fig. 4a in einer 3-D-Ansicht von hinten,
Fig. 5a die Robotereinheit beim Wechsel von Prüffelgen in einer 3-D-Ansicht von vorn und
Fig. 5b die Robotereinheit gemäß Fig. 5a in einer 3-D-Ansicht von hinten.

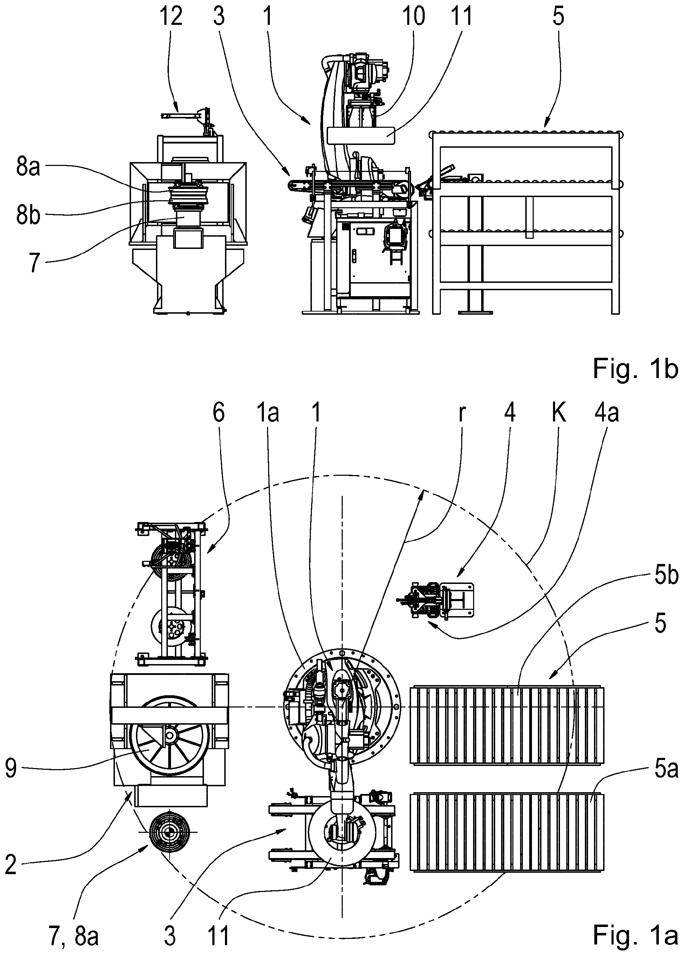

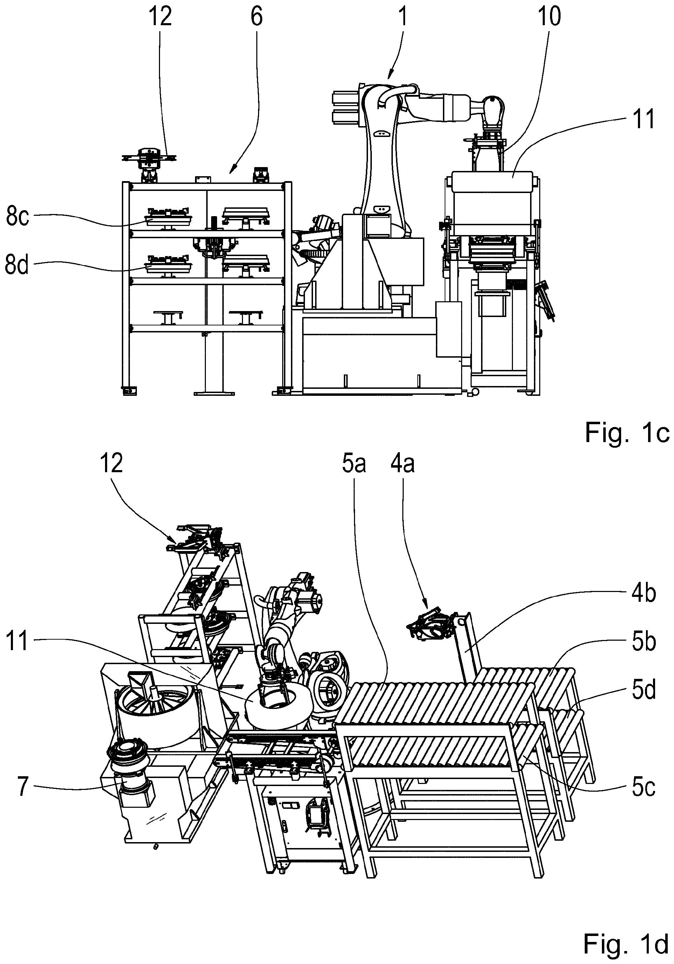

Fig. 1a, Fig. 1b, Fig. 1c und Fig.1d zeigen eine Draufsicht, eine Vorderansicht, eine Seitenansicht und eine 3-D-Darstellung einer Vorrichtung zum Markieren und Sortieren von Reifen sowie zum Wechsel von Prüffelgen. Fig. 1a zeigt einen Roboter 1, welcher im Zentrum eines Kreises K mit dem Radius r angeordnet ist. Der Radius r wird auch als Aktionsradius des Roboters 1 bezeichnet, welcher drehbar auf einem Podest 1a angeordnet ist und mit seinem Greifarm (ohne Bezugszahl) innerhalb des Kreises K und eines Arbeitsraumes oberhalb des Kreises K agieren kann. Der Roboter 1 weist vorzugsweise sechs Dreh- oder Schwenkachsen (ohne Bezugszahl) auf und verfügt damit über eine maximale Beweglichkeit. Der Roboter 1 ist handelsüblich und wird beispielsweise von dem Hersteller *KUKA* unter der Bezeichnung *KR QUANTEC Pro* am Markt angeboten. Innerhalb des Kreises K sind eine teilweise dargestellte Reifenprüfmaschine 2, eine Fördereinrichtung 3, eine Markierstation 4, eine Sortierstation 5 sowie ein Felgenmagazin 6 angeordnet. Die Reifenprüfmaschine 2 umfasst eine antreibbare Spindel 7, auf welcher zwei Prüffelgenhälften 8a, 8b aufgespannt sind, und eine zustellbare Lauftrommel 9. Zwischen den Prüffelgenhälften 8a, 8b kann ein zu prüfender Reifen (hier nicht dargestellt) eingespannt und in Rotation versetzt werden. Die Lauftrommel 9 kann zur Simulation einer Fahrbahn gegen den zu prüfenden, rotierenden Reifen gedrückt werden. Der Roboter 1 weist an seinem äußersten Schwenkarm ein austauschbares Greifwerkzeug, ausgebildet als Drei-Finger-Greifer 10, auf, mittels dessen ein Reifen 11 greifbar und transportierbar ist. Beim Greifen werden die drei Finger radial nach außen gegen den Wulst des Reifens 11 bewegt und zur Erzeugung eines Kraftschlusses angedrückt. Die Markierstation 4 weist eine an sich bekannte Markiereinrichtung 4a auf, welche an einer Konsole 4b, ausgebildet als Doppel-T-Profil 4b, befestigt ist. Die Sortierstation 5 umfasst diverse parallel zueinander angeordnete Fördereinrichtungen, ausgebildet als Rollenbahnen 5a, 5b, 5c, 5d, welche nebeneinander und übereinander angeordnet sind. Das Felgenmagazin 6 ist in Form eines von der Frontseite her zugänglichen Regals ausgebildet, in welchem verschiedene Größen von Prüffelgenhälften 8c, 8d deponiert sind. Zusätzlich können in dem Felgenmagazin 6 weitere Greifwerkzeuge, beispielsweise ein Felgengreifwerkzeug 12, auch Felgenwechselwerkzeug 12 genannt, deponiert werden.

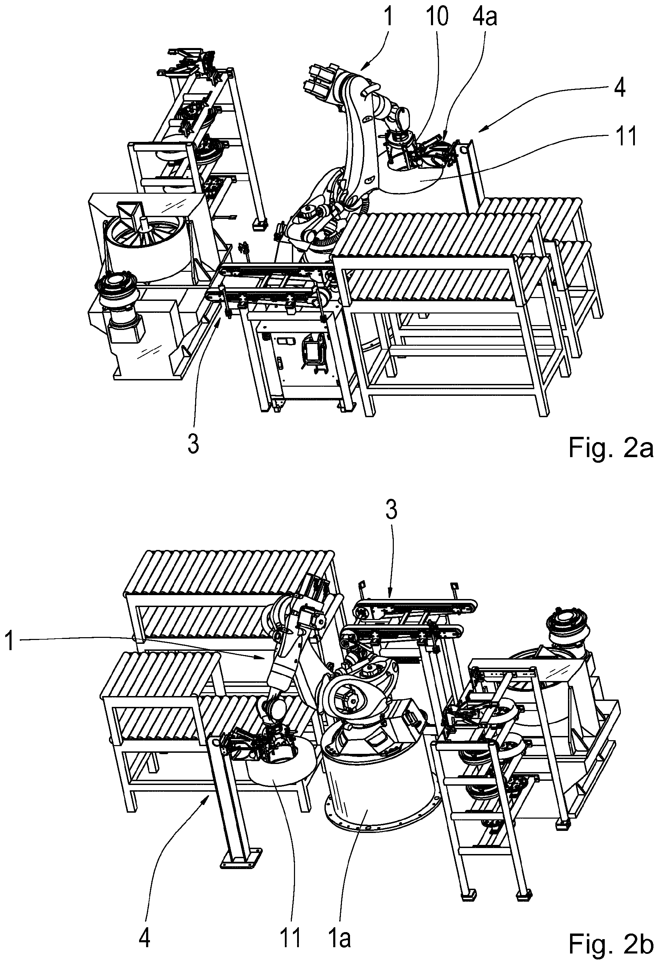

Der Roboter 1 hat einerseits die Aufgabe, Reifen 11, welche von der Reifenprüfmaschine 2 als fertig geprüfte Reifen 11 auf der Fördereinrichtung 3 bereitgestellt werden, zu markieren, d. h. der Markierstation 4 zuzuführen, und anschließend nach Qualitätsstufen zu sortieren, d. h. der Sortiereinrichtung 5 zuzuführen und auf einer ausgewählten Förderbahn 5a, 5b, 5c oder 5d abzulegen. Darüber hinaus hat der Roboter 1 die Aufgabe, bei Bedarf die Prüffelgenhälften 8a, 8b, welche auf der Spindel 7 aufgespannt sind, gegen andere, z. B. größere oder kleinere Prüffelgenhälften 8c, 8d, welche im Felgenmagazin 6 deponiert sind, auszutauschen. Zwei Prüffelgenhälften bilden jeweils eine Prüffelge für einen Reifen. Für diesen Arbeitsgang erfolgt ein Wechsel des Greifwerkzeuges: Der Drei-Finger-Greifer 10 wird vom Roboter 1 im Felgenmagazin 6 abgelegt und durch das Felgenwechselwerkzeug 12 ersetzt. Die Durchführung der vorgenannten Aufgaben wird im Folgenden anhand der Figuren 2a bis 5b näher erläutert.

Fig. 2a und Fig. 2b zeigen den Roboter 1 beim Markieren eines Reifens 11 in zwei 3-D-Darstellungen in entgegengesetzten Blickrichtungen. Nachdem der Roboter 1 den Reifen 11 von der Fördereinrichtung 3 (Fig. 1a - 1d) aufgenommen hat, führt er den Reifen 11 der Markierstation 4 zu. Dabei wird der Reifen 11 in eine waagerechte Position unterhalb der Markiereinrichtung 4a gebracht und gehalten, so dass eine Markierung auf einer Seitenwand des Reifens 11 angebracht werden kann, z. B. ein Farbpunkt, welcher eine bestimmte Qualitätsstufe des Reifens 11 bezeichnet. Die Stelle, wo die Markierung auf dem Reifen 11 angebracht wird, ist durch einen bestimmten Radius und einen bestimmten Umfangswinkel definiert; der Roboter 1 platziert diese zu markierende Stelle des Reifens 11 im unmittelbaren Aktionsbereich der Markiereinrichtung 4a. Für eine eventuell erforderliche weitere Markierung kann die Markiereinrichtung 4a derart verschwenkt werden, dass auch die andere Reifenseitenwand markiert werden kann. In Fig. 2b sind der Reifen 11 und die Markierstation 4 im Vordergrund dargestellt. Der Reifen 11 wird bei diesem Arbeitsgang weiterhin mittels des Drei-Finger-Greifers 10 gehalten und geführt. Im Übrigen ist hier auch der Podest 1a, auf dem der Roboter 1 drehbar angeordnet ist, deutlich erkennbar.

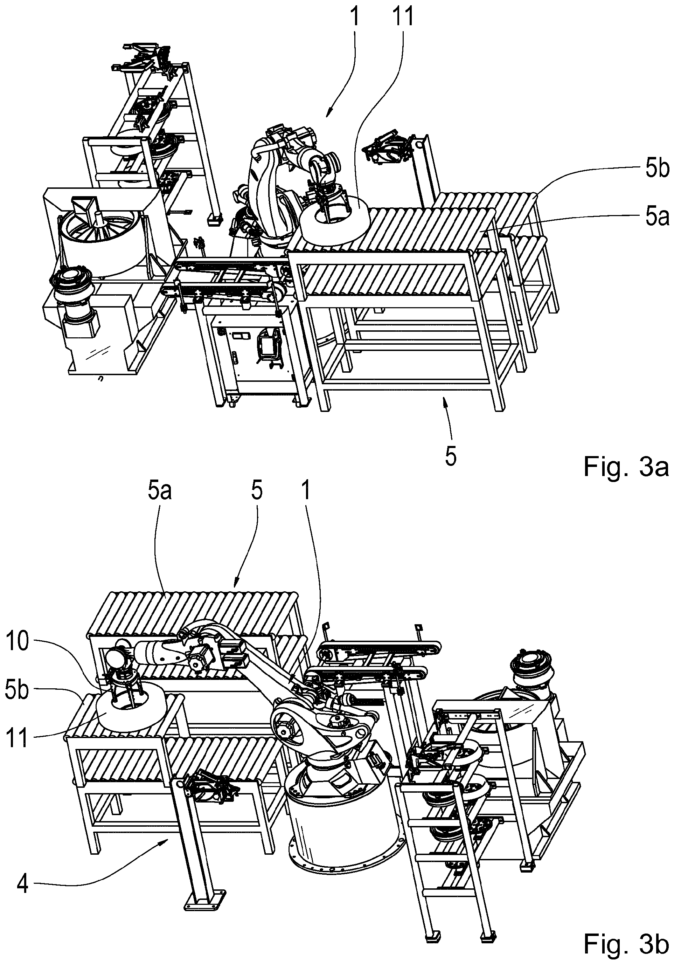

Fig. 3a und Fig. 3b zeigen den Roboter 1 beim Sortieren eines Reifens 11 - der Arbeitsgang, "Sortieren von Reifen" folgt auf den in den Fig. 2a, 2b dargestellten Arbeitsgang "Markieren von Reifen". Die Reifen 11 erhalten nach ihrer Prüfung in der Reifenprüfmaschine 2 (Fig. 1a - 1d) eine bestimmte Qualitätsstufe, z. B. A, B, C. Der Roboter 1 erkennt für jeden aufgenommenen Reifen 11 dessen Qualitätsstufe und legt den Reifen 11 auf einer der betreffenden Qualitätsstufe zugeordneten Rollenbahn ab - in Fig. 3a wird der Reifen 11 auf der Rollenbahn 5a, repräsentativ für die Qualitätsstufe A, abgelegt und anschließend abtransportiert. In Fig. 3b wird der Reifen 11, welcher beispielsweise die Qualitätsstufe B aufweist, auf der zugehörigen Rollenbahn 5b abgelegt und weiter transportiert. Auch dieser Arbeitsgang des Sortierens erfolgt mit Hilfe des Drei-Finger-Greifers 10.

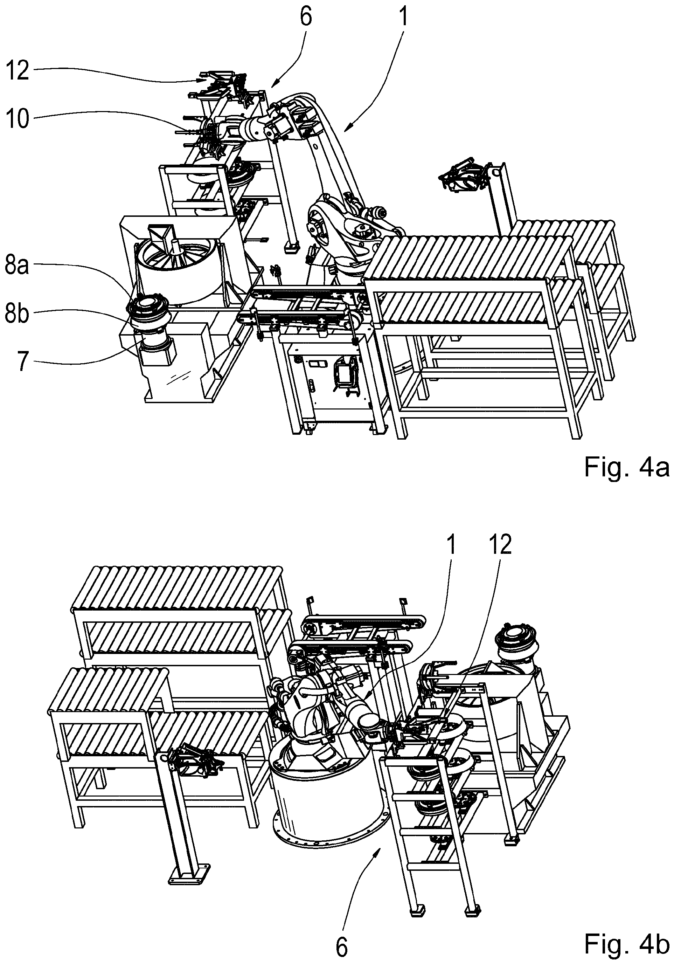

Fig. 4a und Fig. 4b zeigen den Roboter 1 bei einem Werkzeugwechsel, welcher beispielsweise dann vorgenommen wird, wenn für die Prüfung der Reifen andere Prüffelgen, d. h. mit einer anderen Größe benötigt werden. Gemäß dem in Fig. 4a dargestellten Ausführungsbeispiel sollen die auf der Spindel 7 aufgespannten Prüffelgenhälften 8a, 8b gegen andere Prüffelgenhälften getauscht werden. Dazu legt der Roboter 1 das aktuell montierte Greifwerkzeug, den Drei-Finger-Greifer 10, im Felgenmagazin 6 ab und nimmt das Felgenwechselwerkzeug 12, welches im Felgenmagazin 6 deponiert ist, auf. Die Aufnahme des Felgenwechselwerkzeuges 12 ist insbesondere aus Fig. 4b erkennbar.

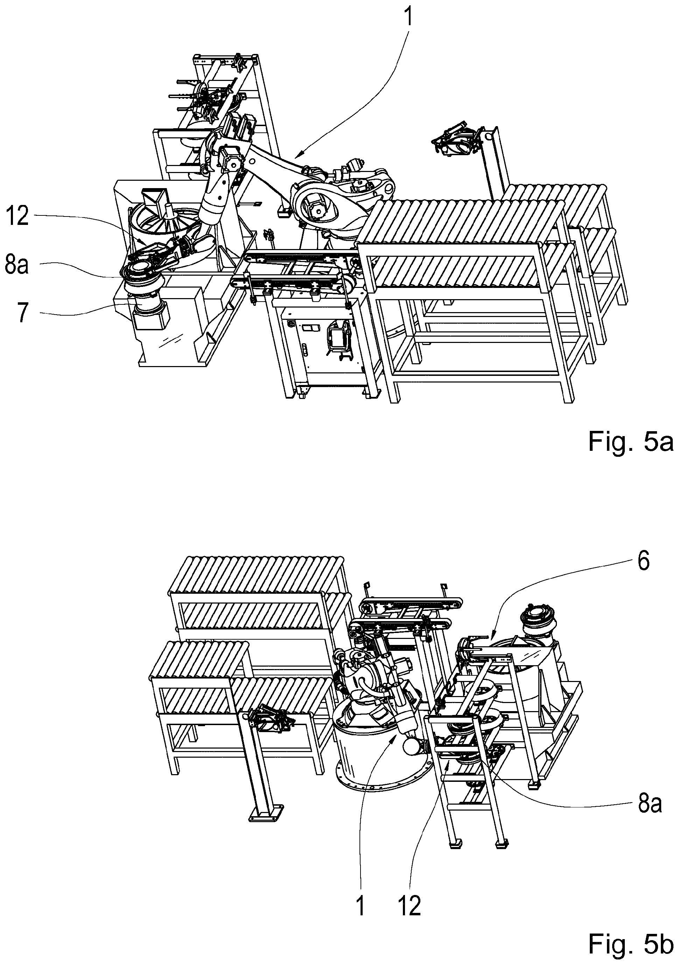

Fig. 5a und Fig. 5b zeigen den nächsten Arbeitsgang, welcher auf den Werkzeugwechsel folgt, d. h. den Wechsel der Prüffelgen 8a, 8b. In Fig. 5a greift der Roboter 1 mittels des zangenartig ausgebildeten Felgenwechselwerkzeuges 12 die obere Prüffelgenhälfte 8a und zieht sie in senkrechter Richtung nach oben von der Spindel 7 ab. Anschließend - was in Fig. 5b erkennbar ist - wird die abgezogene Prüffelgenhälfte 8a im Felgenmagazin 6 abgelegt, eine neue Prüffelgenhälfte aus dem Felgenmagazin 6 entnommen und auf die Spindel 7 aufgesetzt. Damit ist es möglich, einen Reifen anderer Abmessung auf der Reifenprüfmaschine 2 (Fig. 1) zu prüfen. Nach dem Felgenwechsel erfolgt wiederum ein Werkzeugwechsel, d. h. der Roboter 1 nimmt für die nachfolgenden Markier- und Sortiervorgänge wieder den Drei-Finger-Greifer 11 auf, welcher für mehrere Reifengrößen verwendbar ist.

Der Roboter 1 kann auch - was nicht in der Zeichnung dargestellt ist - zum Etikettieren der Reifen verwendet werden. In einem solchen Fall wird der Reifen vom Roboter - zusätzlich zum Markieren und Sortieren - an einer Etikettierstation vorbeigeführt und mit einem Etikett versehen.

### Bezugszeichen

- 1: Roboter
- 1a: Podest
- 2: Reifenprüfmaschine
- 3: Fördereinrichtung
- 4: Markierstation
- 4a: Markiereinrichtung
- 4b: Konsole
- 5: Sortierstation
- 5a: Rollenbahn
- 5b: Rollenbahn
- 5c: Rollenbahn
- 5d: Rollenbahn
- 6: Felgenmagazin
- 7: Spindel
- 8a: Prüffelgenhälfte
- 8b: Prüffelgenhälfte
- 8c: Prüffelgenhälfte
- 8d: Prüffelgenhälfte
- 9: Lauftrommel
- 10: Drei-Finger-Greifer
- 11: Reifen
- 12: Felgenwechselwerkzeug

- K: Kreis
- r: Aktionsradius von Roboter 1

## Patentansprüche

1. Verfahren zum Markieren und Sortieren von Reifen (11) und zum Wechseln von Prüffelgen (8a, 8b) für die Reifen (11), **dadurch gekennzeichnet, dass** die für das Markieren, das Sortieren und das Wechseln erforderlichen Arbeitsschritte durch einen an sich bekannten Roboter (1) ausgeführt werden,
wobei die erforderlichen Arbeitsschritte für das Markieren
- Bereitstellen eines von einer Reifenprüfmaschine (2) fertig geprüften Reifens auf einer Fördereinrichtung (3),
- Aufnehmen eines Reifens (11) von einer Fördereinrichtung (3),
- Zuführen des Reifens zu einer Markierstation (4),
- Bringen des Reifens in eine waagrechte Position unterhalb einer Markiereinrichtung (4a) und
- Halten des Reifens in der waagrechten Position, so dass eine Markierung auf einer Seitenwand des Reifens angebracht werden kann, wobei eine Stelle, an der die Markierung angebracht werden soll, durch einen bestimmten Radius und einen bestimmten Umfangswinkel definiert ist,
- Anbringen der Markierung, wobei die Markierung eine bestimmte Qualitätsstufe des Reifens (11) bezeichnet,
vom Roboter mittels eines Drei-Finger-Greifers (10) ausgeführt werden und
wobei der erforderliche Arbeitsschritt für das Sortieren
- Erkennen der Qualitätsstufe des Reifens (11),
- Ablegen des Reifens (11) auf einer einer betreffenden Qualitätsstufe des Reifens zugeordneten Rollenbahn (5a, 5b),
vom Roboter ebenfalls mittels des Drei-Finger-Greifers (10) ausgeführt wird und wobei die erforderlichen Arbeitsschritte für das Wechseln von Prüffelgen
- Ablegen des Drei-Finger-Greifers (10) in einem Felgenmagazin (6),
- Aufnehmen eines Felgenwechselwerkzeugs (12), welches im Felgenmagazin (6) deponiert ist,
- Greifen einer oberen Prüffelgenhälfte (8a) mittels des Felgenwechselwerkzeugs (12),
- Abziehen der oberen Prüffelgenhälfte (8a) in senkrechter Richtung nach oben von einer Spindel (7) der Reifenprüfmaschine (2),
- Ablegen der oberen Prüffelgenhälfte (8a) im Felgenmagazin (6),
- Entnehmen einer neuen Prüffelgenhälfte aus dem Felgenmagazin (6),
- Aufsetzen der neuen Prüffelgenhälfte auf die Spindel (7) vom Roboter ausgeführt werden und wobei nach einem Felgenwechsel für nachfolgende Markier- und Sortiervorgänge vom Roboter wieder der Drei-Finger-Greifers (10) aufgenommen wird.

2. Vorrichtung zur Durchführung des Verfahrens nach Anspruch 1, umfassend eine Reifenprüfmaschine (2), eine Markierstation (4), eine Sortierstation (5), ein Felgenmagazin (6) sowie einen Roboter (1) mit einem Aktionsradius (r), innerhalb dessen - zumindest teilweise - die Reifenprüfmaschine (2), die Markier- und Sortierstationen (4, 5) sowie das Felgenmagazin (6) angeordnet sind, wobei die Reifenprüfmaschine (2) eine Fördereinrichtung (3) zum Ausfördern und/oder zum Bereitstellen der Reifen (11) sowie mindestens eine mit Prüffelgen (8a, 8b) bestückbare Spindel (7) umfasst, wobei die Markierstation (4) eine an einer Konsole (4b) befestigte Markiereinrichtung (4a) aufweist, wobei die Sortiereinrichtung (5) diverse Fördereinrichtungen (5a, 5b, 5c, 5d) aufweist, **dadurch gekennzeichnet, dass** das Felgenmagazin als Regal (6) zur Ablage und Entnahme von Prüffelgen, bestehend aus oberen und unteren Prüffelgenhälften (8a, 8b), ausgebildet ist, dass der Roboter (1) mit unterschiedlichen Greifwerkzeugen (10, 12) bestückbar ist, und dass das Greifwerkzeug als Drei-Finger-Greifer (10) ausgebildet ist oder als Felgenwechselwerkzeug (12) ausgebildet ist.

3. Vorrichtung nach Anspruch 2, **dadurch gekennzeichnet, dass** der Roboter (1) sechs Achsen aufweist.

## Claims

1. Method for marking and sorting tyres (11) and for changing test rims (8a, 8b) for the tyres (11), **characterized in that** the work steps which are necessary for the marking, sorting and changing are executed by a robot (1) which is known per se,
wherein the following necessary work steps for the marking are executed by the robot by means of a three-finger gripper (10)
- providing a tyre, which has been completely tested by a tyre-testing machine (2), on a conveyor device (3),
- picking up a tyre (11) from a conveyor device (3) ,
- feeding the tyre to a marking station (4),
- moving the tyre into a horizontal position underneath a marking device (4a), and
- securing the tyre in the horizontal position so that a mark can be provided on a sidewall of the tyre, wherein a location at which the mark is to be provided is defined by a specific radius and a specific circumferential angle,
- providing the mark, wherein the mark denotes a specific quality level of the tyre (11),
and wherein the following necessary work step for the sorting is also executed by the robot by means of the three-finger gripper (10)
- detecting the quality level of the tyre (11),
- positioning the tyre (11) on a roller conveyor (5a, 5b) which is assigned to a respective quality level of the tyre,
wherein the following necessary work steps for changing test rims are executed by the robot
- positioning the three-finger gripper (10) in a rim magazine (6),
- picking up a rim-changing tool (12) which is deposited in the rim magazine (6),
- gripping an upper test rim half (8a) by means of the rim-changing tool (12),
- pulling off the upper test rim half (8a) upward in a vertical direction from a spindle (7) of the tyre-testing machine (2),
- positioning the upper test rim half (8a) in the rim magazine (6),
- removing a new test rim half from the rim magazine (6), and
- fitting the new test rim half onto the spindle (7) ,
and wherein after a rim change the three-finger gripper (10) is picked up again by the robot for subsequent marking and sorting processes.

2. Device for carrying out the method according to Claim 1, comprising a tyre-testing machine (2), a marking station (4), a sorting station (5), a rim magazine (6) and a robot (1) having an action radius (r) within which the tyre-testing machine (2), the marking and sorting stations (4, 5) and the rim magazine (6) are - at least partially - arranged,
wherein the tyre-testing machine (2) comprises a conveyor device (3) for conveying out and/or providing the tyres (11) as well as at least one spindle (7) which can be equipped with test rims (8a, 8b),
wherein the marking station (4) has a marking device (4a) which can be attached to a bracket (4b),
wherein the sorting device (5) has various conveyor devices (5a, 5b, 5c, 5d),
**characterized in that**
the rim magazine is embodied as a shelf (6) for depositing and removal of test rims composed of upper and lower test rim halves (8a, 8b),
**in that** the robot (1) can be equipped with different gripper tools (10, 12)
and **in that** the gripper tool is embodied as a three-finger gripper (10) or is embodied as a rim-changing tool (12) .

3. Device according to Claim 2, **characterized in that** the robot (1) has six axes.

## Revendications

1. Procédé permettant de marquer et de trier des pneumatiques (11) et de remplacer des jantes de contrôle (8a, 8b) pour les pneumatiques (11), **caractérisé en ce que** les étapes de travail nécessaires au marquage, au tri et au remplacement sont effectuées par un robot (1) connu en soi,
dans lequel les étapes de travail nécessaires au marquage, à savoir
- fournir un pneu entièrement contrôlé par une machine de contrôle de pneu (2) sur un convoyeur (3),
- prendre un pneu (11) sur le convoyeur (3),
- amener le pneu à un poste de marquage (4),
- mettre le pneu dans une position horizontale au-dessous d'un dispositif de marquage (4a), et
- maintenir le pneu dans la position horizontale de sorte qu'un marquage peut être appliqué à une paroi latérale du pneu, un endroit où le marquage doit être appliqué étant défini par un certain rayon et un certain angle circonférentiel,
- appliquer le marquage, le marquage désignant un certain niveau de qualité du pneu (11),
sont effectuées par le robot au moyen d'une pince à trois doigts (10), et
dans lequel les étapes de travail nécessaires au tri, à savoir
- reconnaître le niveau de qualité du pneu (11),
- déposer le pneu (11) sur un convoyeur à galets (5a, 5b) associé à un niveau de qualité respectif du pneu,
sont effectuées par le robot également au moyen de la pince à trois doigts (10), et
dans lequel les étapes de travail nécessaires au remplacement de jantes de contrôle, à savoir
- déposer la pince à trois doigts (10) dans un stock de jantes (6),
- prendre un outil de remplacement de jante (12) qui est rangé dans le stock de jantes (6),
- saisir une moitié de jante de contrôle supérieure (8a) au moyen de l'outil de remplacement de jante (12),
- retirer d'une broche (7) de la machine de contrôle de pneu (2) la moitié de jante de contrôle supérieure (8a) dans la direction verticale vers le haut,
- déposer la moitié de jante de contrôle supérieure (8a) dans le stock de jantes (6),
- prélever une nouvelle moitié de jante de contrôle sur le stock de jantes (6),
- placer la nouvelle moitié de jante de contrôle sur la broche (7),
sont effectuées par le robot, et dans lequel, après un remplacement de jante, le robot reprend la pince à trois doigts (10) pour des opérations de marquage et de tri ultérieures.

2. Dispositif permettant d'effectuer le procédé selon la revendication 1, comprenant une machine de contrôle de pneu (2), un poste de marquage (4), un poste de tri (5), un stock de jantes (6), ainsi qu'un robot (1) ayant un rayon d'action (r) à l'intérieur duquel sont disposés, au moins en partie, la machine de contrôle de pneu (2), les postes de marquage et de tri (4, 5) ainsi que le stock de jantes (6),
la machine de contrôle de pneu (2) comprenant un convoyeur (3) pour sortir et/ou pour fournir le pneu (11), ainsi qu'au moins une broche (7) pouvant être équipée de jantes de contrôle (8a, 8b),
le poste de marquage (4) présentant un dispositif de marquage (4a) fixé à une console (4b),
le dispositif de tri (5) présentant divers convoyeurs (5a, 5b, 5c, 5d),
**caractérisé en ce que**
le stock de jantes est réalisé sous la forme d'une étagère (6) permettant de déposer et de prélever des jantes de contrôle, composées de moitiés de jante de contrôle supérieures et inférieures (8a, 8b),
le robot (1) peut être équipé de différents outils de préhension (10, 12), et
l'outil de préhension est réalisé sous la forme d'une pince à trois doigts (10) ou d'un outil de remplacement de jante (12) .

3. Dispositif selon la revendication 2, **caractérisé en ce que** le robot (1) présente six axes.
